# EUROPÄISCHE PATENTSCHRIFT

(11) **EP 1 860 819 B1**
(45) Veröffentlichungstag und Bekanntmachung des Hinweises auf die Patenterteilung: **11.09.2013**
(21) Anmeldenummer: 06114404.4
(22) Anmeldetag: 23.05.2006
(51) Int. Cl.: H04L 12/18

(54) **Verfahren und Vorrichtung zum dynamischen Aufbau und zur Steuerung von kurzzeitig gebildeten Kommunikationsgruppen mit gesicherter Übertragung**
Method and system for dynamically constructing and controlling short-lived communication groups with secure transmission
Procédé et système pour la construction et la gestion des groupes de communication de courte durée avec transmission securisée

(43) Veröffentlichungstag der Anmeldung: 28.11.2007
(73) Patentinhaber: Nokia Siemens Networks GmbH & Co. KG, 81541 München (DE)
(72) Erfinder: Zhou, Di, 1220 Wien (AT)

(56) Entgegenhaltungen:
- EP-A- 1 562 322
- EP-A2- 0 952 718
- EP-A2- 1 331 755
- YINGJIC WANG ET AL: "An efficient method of group rekeying for multicast communication" EMERGING TECHNOLOGIES: FRONTIERS OF MOBILE AND WIRELESS COMMUNICATION, 2004. PROCEEDINGS OF THE IEEE 6TH CIRCUITS AND SYSTEMS SYMPOSIUM ON SHANGHAI, CHINA MAY 31-JUNE 2, 2004, 31. Mai 2004 (2004-05-31), Seiten 273-276, XP010716071
- 3RD GENERATION PARTNERSHIP PROJECT (3GPP): "3GPP TS 22.146 V7.1.0, 3rd Generation Partnership Project; Technical Specification Group Services and System Aspects; Multimedia Broacast/Multicast Service; Stage 1 (Release 7)" 3GPP TS 22.146 V7.1.0, März 2006 (2006-03), XP002385907
- 3GPP GROUP SERVICES AND SYSTEM ASPECTS: "3GPP TS 23.246 V.6.5.0: Multimedia Broadcast/Multicast Service (MBMS); Architecture and functional description Release 6" 3GPP TS 23.246 V6.5.0, Dezember 2004 (2004-12), XP002333585

## Beschreibung

Die Arbeiten, die zu dieser Erfindung geführt haben, wurden gemäß der Finanzhilfevereinbarung Nr. 027662 im Zuge des Siebten Rahmenprogramms der Europäischen Gemeinschaft (RP7/2007-2013) gefördert.

Die Erfindung betrifft ein Verfahren sowie eine Vorrichtung zum dynamischen Aufbau und zur Steuerung von kurzzeitig gebildeten Kommunikationsgruppen mit gesicherter Übertragung, wobei potentiell an einer Kommunikationsgruppe teilnehmende Knoten über ein gemeinsames Übertragungsmedium verbunden sind. Von diesem Übertragungsmedium wird dann eine effiziente Übertragung von so genannten Broadcast- und/oder Multicast-Nachrichten ermöglicht.

Derzeit werden im Bereich Telekommunikation mehr und mehr unterschiedliche Arten von mobilen sowie drahtgebundenen Kommunikationsnetzwerken entworfen, entwickelt und eingesetzt. Dabei wird unter einem Kommunikationsnetz definitionsgemäß ein Oberbegriff für alle Ressourcen verstanden, von welchen Nutzern Dienste mit Dienstmerkmalen zu Kommunikationszwecken bzw. zum Übertragen von Daten zur Verfügung gestellt werden.

Um den Nutzer diese Dienste unabhängig von deren aktuellen Aufenthaltsort zur Verfügung stellen zu können, ist eine Zusammenarbeit zwischen Kommunikationsnetzen wie z.B. Personal Area Networks (PAN), welche beispielsweise von Geräten wie PDAs oder Mobiltelefonen ad-hoc mittels drahtgebundener Übertragungstechniken (z.B. USB, FireWire, etc.) oder auch mittels drahtloser Techniken (z.B. IrDA, Bluetooth, etc.) auf- und abgebaut werden können, Body Area Networks (BAN), Sensor Area Networks (SAN), etc. notwendig. Kommunikationsnetzen bzw. auch von einzelnen Geräten wie z.B. PDAs, Mobiltelefonen, Laptops, etc. so genannte Kommunikationsgruppen für verschiedene Zwecke gebildet werden - wie beispielsweise: wenn von einer Gruppe von Passagieren in einem Zug eine lokale Kommunikationsgruppe mittels deren PANs aufgebaut wird, um ein elektronisches Spiel gemeinsam zu spielen; wenn während einer Fachmesse von Experten mit verschiedenen Standorten auf einem Messegelände mit ihrem elektronischem Equipment (z.B. Laptop, PDA, etc.) eine Kommunikationsgruppe für Diskussionszwecke gebildet wird; wenn Mitarbeiter einer Firma, beispielsweise von verschiedenen Bereichen mit ihrem elektronischen Equipment (z.B. Laptop, PDA, etc.) eine dynamische Kommunikationsgruppe bilden, um ein zufälliges Ereignis (z.B. Ablaufsredaktionen ausgelöst durch ein Software-Programm, etc.) zu beobachten und zu diskutieren oder wenn in einer Abflugshalle eines internationalen Flughafens von einigen Passagieren eine Kommunikationsgruppe gebildet wird, um Informationen über Flugziele, etc. auszutauschen.

All diesen beispielhaften Szenarien sind einige Eigenschaften gemeinsam:
- die an einer Kommunikationsgruppe teilnehmenden Knoten müssen einander vor Aufbau dieser Kommunikationsgruppe nicht unbedingt kennen (z.B. Kennungen, elektronische Adressen, Sicherheitsschlüssel, etc. sind vorher nicht bekannt), um z.B. dann innerhalb der gebildeten Kommunikationsgruppe Informationen auszutauschen. Der Begriff "Knoten" bezeichnet dabei sowohl ein von einem Nutzer verwendetes Endgerät wie z.B. PDA, Laptop, Mobiltelefon, Computer, etc. als auch ein Kommunikationsnetz wie z.B. PAN, BAN, SAN, etc., welches mehrere Geräte (z.B. Laptop, PDA, Mobiltelefon, etc.) umfasst.
- Ein Knoten bzw. das für die Kommunikation verwendete Equipment verfügt nur über eine begrenzte Reichweite. Außerdem sind die Knoten über ein gemeinsames Übertragungsmedium wie z.B. durch einen Ethernet Link oder innerhalb eines durch einen Zugangspunkt zu einem Wireless LAN versorgten Bereichs verbunden.
- Ein Vorhandensein von generellen Infrastruktur-Diensten, wie sie beispielsweise vom Internet zur Verfügung gestellt werden, kann nicht vorausgesetzt werden.
- Die Kommunikationsgruppe wird bei Bedarf dynamisch aufgebaut und besteht für relativ kurze Zeit.
- Die Kommunikation innerhalb der Kommunikationsgruppe wird nach dem Peer-to-Peer-Prinzip durchgeführt und die Übertragung sollte gesichert erfolgen - d.h. ein Abhören der innerhalb der Kommunikationsgruppe stattfindenden Kommunikation durch einen nicht an der Kommunikationsgruppe teilnehmenden Knoten sollte nicht möglich sein.
- Der Aufbau und die Steuerung der Kommunikationsgruppe sollten dynamisch und automatisch erfolgen, da bei den teilnehmenden Nutzern zumeist keine oder nur geringe Erfahrung im Bereich von Netzmanagement vorgesetzt werden können.

Weiters ist es notwendig, dass vom Übertragungsmedium, an welches die Knoten angebunden sind, ein effizienter Mechanismus für die Übertragung von so genannten Broadcast- und Multicast-Nachrichten zur Verfügung gestellt wird, da einerseits nicht vorhersehbar ist, welche Anzahl an Knoten an einer Kommunikationsgruppe teilnehmen wird. Anderseits kann die Kommunikation innerhalb der Kommunikationsgruppe auch von einem Knoten zu allen anderen Knoten der Kommunikationsgruppe erfolgen - beispielsweise wenn von einem Knoten eine Kommunikationsgruppe gestartet wird, um andere Knoten zu einer Videoinformation mit Diskussion einzuladen.

Broadcast, teilweise auch unter dem Begriff "Rundruf" bekannt, bezeichnet die Übertragung einer elektronischen Nachricht bzw. inhaltlich identischer Kopien dieser Nachricht von einem sendenden Knoten an alle Knoten eines Kommunikationsnetzes bzw. mehrerer zusammenarbeitender Kommunikationsnetze. Eine so genannte Broadcast-Nachricht wird in Kommunikationsnetzen vorwiegend dann verwendet, wenn die Adressen der empfangenden Knoten noch nicht bekannt sind. Ebenso werden Broadcast-Nachrichten für eine einfache Übermittlung von Informationen an alle Knoten eines Kommunikationsnetzes bzw. mehrerer zusammenarbeitender Kommunikationsnetze eingesetzt. Von jedem Knoten, von welchem eine Broadcast-Nachricht empfangen wird, muss dann diese Nachricht entgegengenommen und darüber entschieden werden, ob die Nachricht von ihm verarbeitet werden muss. Falls vom empfangenen Knoten keine Zuständigkeit für diese Nachricht erkannt wird, wird die Nachricht verworfen.

Unter Multicast, welches auch unter dem Begriff "Gruppenruf" bekannt ist, wird das Übertragen einer elektronischen Nachricht bzw. inhaltlich identischer Kopien dieser Nachricht von einem sendenden Knoten an eine Gruppe von empfangenden Knoten verstanden.

Wird eine Nachricht Punkt-zu-Punkt - d.h. von einem sendenden Knoten zu einem empfangenden Knoten übertragen, so wird diese Nachricht auch als Unicast-Nachricht bezeichnet.

Der Vorteil von Broadcast- bzw. Multicast-Nachrichten besteht darin, dass eine Nachricht gleichzeitig an alle Knoten eines Kommunikationsnetzwerkes bzw. an mehrere Knoten oder alle Knoten einer Gruppe gesendet werden kann. Dies bedeutet, dass auf Seiten des sendenden Knotens in der Regel lediglich eine Bandbreite benötigt wird, die mit derjenigen beim Senden der elektronischen Nachricht an einen einzelnen Empfänger identisch ist. Es ist daher bei Broadcast- oder Multicast-Nachrichten nicht notwendig, dass die erforderliche Bandbreite mit der Anzahl der empfangenden Knoten skaliert wird, besonders wenn die Nachrichten über ein gemeinsames Übertragungsmedium übermittelt werden.

Generell stellt sich die Frage, wie bei Bedarf sich kurzfristig bildende Kommunikationsgruppen mit gesicherter Übertragung dynamisch auf möglichst effiziente Art und Weise - ausgehend von einem Knoten - einem so genannten Initiator-Knoten - aufgebaut und gesteuert werden können.

Aus der EP-A2-0 952 718 ist ein effizientes und sicheres Multicast-Verfahren bekannt. Hierzu wird ein Knoten zum Aufbau und Steuerung von kurzzeitig gebildeten Kommunikationsgruppen mit gesicherter Übertragung eingesetzt.

Im Stand der Technik genommen werden ein automatischer und dynamischer Aufbau sowie eine Steuerung von kurzzeitig gebildeten Kommunikationsgruppen sowie eine gesicherte Übertragung von Multicast-Nachrichten innerhalb der Kommunikationsgruppen nicht unterstützt. Der Aufbau von Kommunikations-gruppen erfolgt zurzeit statisch, d.h. eine entsprechende Registrierung der Knoten ist vor dem Aufbau der Kommunikationsgruppe notwendig, um Informationen z.B. in Form von Multicast-Nachrichten austauschen zu können. Diese Registrierung (z.B. Bekanntgabe von Kennung und Adresse des Knotens) muss meist vom Nutzer vor der Teilnahme an der Kommunikationsgruppe durchgeführt werden, wobei nicht selten spezifisches technisches Know-How vorgesetzt wird.

Existierende Verfahren zur Übertragung von Broadcast- bzw. Multicast-Nachrichten, wie z.B. das aus dem Dokument "3GPP TS 22.146 V7.1.0 (2006-03); 3rd Generation Partnership Project; Technical Specification Group Service and System Aspects; Multimedia Broadcast/Multicast; Stage 1 (Release 7)" bekannte Verfahren, beruhen in der Regel darauf, dass eine so genannte Multicast-Kennung, welche auch als Multicast-Adresse bezeichnet wird, definiert und einer Gruppe von Knoten zugewiesen wird. Dabei ist es notwendig, dass alle sendenden und empfangenden Knoten die Information über die Multicast-Kennung besitzen. Aus diesem Grund ist eine Registrierung aller an einer Kommunikationsgruppe teilnehmenden Knoten vor dem Start dieser Kommunikationsgruppe erforderlich, damit eine Übertragung von Multicast-Nachrichten innerhalb der Gruppe erfolgen kann.

Entsprechende Verfahren eignen sich somit im Wesentlichen nur für statische Anwendungen, wie beispielsweise Fernseh- oder Radioübertragungen, welche außerdem eine mittel- bis langfristige Zugehörigkeit der Knoten zur Kommunikationsgruppe voraussetzen. Bei solchen Anwendungen ist es für einen sendenden Knoten üblicherweise nicht notwendig, Informationen über Eigenschaften der empfangenden Knoten zu besitzen. Weiterhin ist es bei diesen Anwendungen aus Sicht eines sendenden Knoten auch nicht erforderlich sicher zu stellen, dass alle empfangenden Knoten eine gesendete Multicast-Nachricht tatsächlich empfangen können und dass die Übertragung dieser Nachricht in gesicherter Form durchgeführt wird.

Aus den genannten Gründen sind die zuvor beschriebenen Verfahren in ihrer Anwendbarkeit für den automatischen und dynamischen Aufbau und die Steuerung von kurzzeitig gebildeten Kommunikationsgruppen ungeeignet, innerhalb welcher die Übertragung von Nachrichten in gesicherter Form erfolgen soll und diese Nachrichten auch sicher von den teilnehmenden Knoten empfangen werden sollen. Durch die Notwendigkeit einer vorherigen Registrierung, von welcher auch eine Existenz von generellen Infrastruktur-Diensten und eventuell von spezifischen, technischen Know-How vorausgesetzt wird, ist es nicht möglich, spontan und bei Bedarf für kurze Zeit auf einfache Weise eine Kommunikationsgruppe zu bilden.

Der vorliegenden Erfindung liegt daher die Aufgabe zugrunde, ein leistungsfähiges Verfahren sowie eine Vorrichtung anzugeben, durch welche in effizienter und einfacher Weise bei Bedarf kurzzeitig Kommunikationsgruppen mit gesicherter Übertragung automatisch und dynamisch aufgebaut werden.

Die Lösung der Aufgabe erfolgt durch ein Verfahren der eingangs angeführten Art, wobei der dynamische Aufbau einer Kommunikationsgruppe durch einen Initiator-Knoten in folgenden Schritten durchgeführt wird:
- Versenden einer Broadcast-Nachricht, welche zumindest eine Gruppenkennung, eine Kennung des Initiator-Knotens, Information über die Kommunikationsgruppe und eine Adresse des Initiator-Knotens enthält, an alle mit dem Intiator-Knoten über das gemeinsame Übertragungsmedium verbundenen Knoten,
- Analyse der empfangenen Broadcast-Nachricht durch die über das gemeinsame Übertragungsmedium erreichbaren Knoten, wobei der Initiator-Knoten von diesen authentifiziert wird,
- Zurücksenden einer Unicast-Nachricht durch an der Kommunikationsgruppe teilnehmende Knoten an den Initiator-Knoten, wobei die Unicast-Nachricht zumindest eine Kennung und eine Adresse des teilnehmenden Knoten enthält,
- Empfang dieser Unicast-Nachrichten und Authentifizierung der teilnehmenden Knoten durch den Initiator-Knoten,
- Versand einer Unicast-Nachricht, welche zumindest eine Multicast-Kennung sowie einen Sicherheitsschlüssel umfasst, an jeden an der Kommunikationsgruppe teilnehmenden Knoten durch den Initiator-Knoten.

Der Hauptaspekt der erfindungsgemäß vorgeschlagenen Lösung besteht darin, dass der Aufbau der Kommunikationsgruppe dynamisch und automatisch durchgeführt wird. Es wird nicht vorausgesetzt, dass Knoten, von welchen an der Kommunikationsgruppe teilgenommen wird, über gruppenspezifische Informationen wie z.B. Multicast-Kennung oder Sicherheitsschlüssel vor dem Aufbaus und Start der Kommunikationsgruppe informiert werden müssen, wodurch keine aufwendige Registrierung, bei welcher nicht selten spezifisches Know-How vorausgesetzt wird, vom Nutzer durchgeführt werden muss. Außerdem können durch die gemeinsame Multicast-Kennung und den gemeinsamen Sicherheitsschlüssel innerhalb der Kommunikationsgruppe auf einfache Weise und in gesicherter Form Multicast-Nachrichten versendet werden.

Es ist vorteilhaft, wenn für einen synchronisierten Start der Kommunikationsgruppe vom Initiator-Knoten eine spezielle, verschlüsselte Multicast-Nachricht an alle an der Kommunikationsgruppe teilnehmenden Knoten versendet wird. Bei bestimmten Anwendungen, wie beispielsweise Übertragung von Videoinformationen oder Diskussionsgruppen mit festgesetztem Zeitrahmen, können somit auf einfache Weise alle Gruppenmitglieder über den Start der Kommunikationsgruppe informiert werden.

Es ist günstig, wenn vom Initiator-Knoten die Kennungen aller an der Kommunikationsgruppe teilnehmenden Knoten an alle an der Kommunikationsgruppe teilnehmenden Knoten versendet werden, damit von teilnehmenden Knoten auch Unicast-Nachrichten gezielt und auf einfache Weise an andere teilnehmende Knoten gesendet werden.

Des weiteren empfiehlt sich, wenn für eine laufende Erweiterung einer bestehenden Kommunikationsgruppe vom Initiator-Knoten in periodischen Abständen eine Broadcast-Nachricht, welche zumindest eine Gruppenkennung, eine Kennung des Initiator-Knotens, Information über die Kommunikationsgruppe und eine Adresse des Initiator-Knotens enthält, über das gemeinsame Übertragungsmedium versandt wird, dann von Knoten, um der bestehenden Kommunikationsgruppe beizutreten, eine Unicast-Nachricht, welche zumindest eine Kennung und eine Adresse des teilnehmenden Knoten enthält, an den Initiator-Knoten gesendet wird und dann diese Knoten vom Initiator-Knoten authentifiziert werden und eine Unicast-Nachricht, welche zumindest die Multicast-Kennung sowie den Sicherheitsschlüssel der Kommunikationsgruppe umfasst, an diese Knoten gesendet wird. Auf diese einfache Weise kann von einem interessierten Nutzer bzw. Knoten ohne große Aufwendungen jeder Zeit an der Kommunikationsgruppe teilgenommen werden.

Ein wichtiger Aspekt der Erfindung besteht auch darin, dass von einem Knoten, von welchem die Kommunikationsgruppe verlassen wird, eine spezielle Unicast-Nachricht, welche zumindest seine Kennung umfasst, an den Initiator-Knoten gesendet wird, dass dann vom Initiator-Knoten nach Empfang der Unicast-Nachricht der entsprechende Knoten authentifiziert und die zugehörigen Informationen gelöscht werden und dass dann vom Initiator-Knoten ein neuer Sicherheitsschlüssel generiert und dieser dann verschlüsselt mittels einer Unicast-Nachricht an jeden in der Kommunikationsgruppe verbleibenden Knoten gesendet wird. Einerseits kann dadurch jeder teilnehmende Knoten die Kommunikationsgruppe jederzeit auf einfache und effiziente Weise verlassen. Anderseits wird durch das Generieren und Verteilen eines neuen Sicherheitsschlüssels sichergestellt, dass von jenem Knoten, von welchem die Kommunikationsgruppe verlassen wurde, die Kommunikation innerhalb der Kommunikationsgruppe nicht mehr mitgehört werden kann.

Es ist vorteilhaft, wenn in der Unicast-Nachricht gemeinsam mit dem neuen Sicherheitsschlüssel Informationen über den Knoten, von welchem die Kommunikationsgruppe verlassen worden ist, versendet werden. Dadurch werden die verbleibenden Knoten informiert, von welchem Knoten die Kommunikationsgruppe verlassen worden ist, und es wird verhindert, dass beispielsweise Nachrichten an diesen Knoten gesendet werden.

Es ist weiters günstig, wenn nach dem Verlassen der Kommunikationsgruppe durch einen Knoten neben dem Sicherheitsschlüssel auch die Multicast-Kennung und / oder die Gruppenkennung geändert werden. Auf diese Weise wird sichergestellt, dass keine Multicast-Nachrichten mehr an den Knoten, von welchem die Kommunikationsgruppe verlassen worden ist, gesendet werden, und damit das Übertragungsmedium unnötig belastet wird.

Eine zweckmäßige Weiterbildung der Erfindung sieht vor, dass vom Initiator-Knoten, von welchem die Kommunikationsgruppe verlassen wird, eine spezielle Multicast-Nachricht, welche zumindest seine Kennung und eine Anfrage nach Funktionstransfer umfasst, an alle an der Kommunikationsgruppe teilnehmenden Knoten versendet wird, dass von allen jenen Knoten, von welchen die Initiator-Funktion übernommen werden kann, eine spezielle Unicast-Nachricht, welche zumindest ihre Kennung enthält, an den Initiator-Knoten gesendet wird, dass nach dem Empfang dieser Unicast-Nachrichten und der Authentifizierung der antwortenden Knoten vom Initiator-Knoten nach einer vorgegebenen Verfahrensweise aus diesen antwortenden Knoten ein neuer Initiator-Knoten gewählt wird, dass dann mittels Unicast-Nachricht Informationen über die Kommunikationsgruppe und die teilnehmenden Knoten vom Initiator-Knoten an den neuen Initiator-Knoten übertragen werden, und dass dann vom neuen Initiator-Knoten die Initiator-Funktion übernommen und ein neuer Sicherheitsschlüssel generiert wird, welcher mittels einer Unicast-Nachricht verschlüsselt und gemeinsam mit Informationen über den neuen Initiator-Knoten an jeden in der Kommunikationsgruppe vorhandenen Knoten gesendet wird.

Durch diese Verfahrensweise wird auf einfache Weise sichergestellt, dass die Kommunikationsgruppe weitergeführt und gesteuert werden kann, auch nachdem die Kommunikationsgruppe vom Initiator-Knoten verlassen worden ist. Zusätzlich kann eine Verfahrensweise für die Wahl des neuen Initiator-Knotens vorgegeben werden - z.B. neuer Initiator-Knoten wird der erste Knoten, von dem einen entsprechende Unicast-Nachricht empfangen wird oder welcher bestimmte, definierte Eigenschaften aufweist, etc.

Es ist außerdem vorteilhaft, wenn während des Aufbaus und/oder beim Verlassen der Kommunikationsgruppe ein asymmetrisches Kryptosystem verwendet wird, da dieses Kryptosystem nicht nur für eine Verschlüsselung, sondern auch für eine Authentifizierung eingesetzt werden kann. Zusätzlich kann bei Vorhandensein eines generellen Sicherheits-Services im Kommunikationsnetz bzw. den zusammenarbeitenden Kommunikationsnetzen, dieses Sicherheitsservice genutzt werden. Ist dieses Sicherheitsservice nicht verfügbar, so können beispielsweise der öffentliche Schlüssel des Intiator-Knotens mit der Broadcast-Nachricht bzw. die öffentliche Schlüssel der jeweils teilnehmenden Knoten mit der jeweiligen Unicast-Nachricht versendet werden.

Von einem asymmetrischen Kryptosystem, welches auch als Public-Key-Verfahren bezeichnet wird, werden verschiedene Schlüssel zur Ver- und Entschlüsselung - so genannte öffentliche (Public) und geheime (Private) Schlüssel (Keys) - verwendet, wobei der öffentliche Schlüssel allgemein zugänglich gemacht wird. Die Grundidee des asymmetrischen Kryptosystem besteht darin, dass die Verschlüsselung mit Hilfe des öffentlichen Schlüssels und einem bekannten Algorithmus durchgeführt wird, welche vom empfangenden Knoten dem sendenden Knoten über z.B. öffentlich zugängliche Kanäle oder mittels eines öffentlich zugänglichen Sicherheits-services zur Verfügung gestellt werden. Die Entschlüsselung z.B. einer Nachricht erfolgt dann durch den empfangenden Knoten mit einem zum öffentlichen Schlüssel passenden geheimen Schlüssel, welcher nur dem empfangenden Knoten bekannt ist.

Bei einer Umkehrung des Verfahrens kann das asymmetrische Kryptosystem auch für die Authentifizierung, d.h. für eine Feststellung bzw. Überprüfung der Authentizität eines sendenden Knoten, eingesetzt werden. Dabei wird ein Inhalt (z.B. die Kennung des jeweils sendenden Knotens wie z.B. des Initiator-Knotens, teilnehmenden Knotens) einer Nachricht mit dem geheimen Schlüssel verschlüsselt. Vom empfangenden Knoten wird dann über die Entschlüsselung mit dem öffentlichen Schlüssel geprüft, ob eine Quelle einer Nachricht mit dem vermuteten sendenden Knoten übereinstimmt.

Als Alternative kann auch innerhalb der Kommunikationsgruppe ein symmetrisches Kryptosystem verwendet werden, da beim symmetrischen Kryptosystem nur ein Schlüssel (Sicherheitsschlüssel) zur Ver- und Entschlüsselung von Nachrichten verwendet wird, um die Kommunikation innerhalb der Kommunikationsgruppe vor unbefugtem Zugriff zu schützen. Dieser Sicherheitsschlüssel, der von allen an der Kommunikationsgruppe teilnehmenden Knoten zum Ver- und Entschlüsseln verwendet wird, wird beispielsweise beim Aufbau der Kommunikationsgruppe vom Intiator-Knoten generiert und dann den teilnehmenden Knoten gemeinsam mit der Multicast-Kennung zur Verfügung gestellt. Wird die Kommunikationsgruppe von einem Knoten verlassen, so ist es nur notwendig, einen neuen Sicherheitsschlüssel zu generieren und zu verteilen. Außerdem braucht durch Verwendung eines symmetrischen Kryptosystems für die Zeit des Bestehens der kurzfristigen Kommunikationsgruppe kein aufwendiges generelles Sicherheitsservice eingerichtet werden.

In einer bevorzugten Ausführungsform ist das erfindungsgemäße Verfahren derart ausgestaltet, dass als gemeinsames Übertragungsmedium ein Medium der Sicherungsschicht (Data Link Layer) verwendet wird, da bei den üblicherweise verwendeten, beispielsweise nach dem OSI (Open System Interconnection)-Modell implementierten Protokollstapeln die Sicherungsschicht (Schicht 2, auch als Data Link Layer oder Link Layer bezeichnet) in der Regel in Form eines gemeinsamen Übertragungsmediums realisiert ist.

Es ist auch günstig, wenn als gemeinsames Übertragungsmedium ein Funkübertragungskanal verwendet wird, da dadurch das erfindungsgemäße Verfahren zum dynamischen Aufbau und zur Steuerung von kurzzeitig gebildeten Kommunikationsgruppen mit gesicherter Übertragung auch im Falle von drahtlos über ein Mobilfunknetz miteinander verbundenen Knoten verwendet werden kann.

Vorzugsweise kann das erfindungsgemäße Verfahren auch derart ausgestaltet sein, dass als gemeinsames Übertragungsmedium ein Datenbus verwendet wird. Bei einem Datenbus handelt es sich im Falle von drahtgebundenen miteinander verbundenen Knoten um ein gebräuchliches und leistungsfähiges gemeinsames Übertragungsmedium.

Zur Übertragung von Broadcast-, Multicast- und Unicast-Nachrichten können beliebige existierende oder zukünftige Protokollstandards drahtloser oder drahtgebundener Technologien, insbesondere der Sicherungsschicht, verwendet werden, welche ein gemeinsames Übertragungsmedium verwenden. Beispielhaft seien GSM (Global System for Mobile Communications), WCDMA (Wideband Code Division Multiple Access), TD-SCDMA (Time Division Synchronous Code Division Multiple Access) und WiMAX (Worldwide Interoperability for Microwave Access) genannt. In einer besonders bevorzugten Weiterbildung des erfindungsgemäßen Verfahrens werden die Broadcast-, Multicast- und Unicast-Nachrichten unter Verwendung des Ethernet (IEEE802.3)-Standards oder des Wireless Local Area Network (WLAN, IEEE802.11)-Standards gesendet, da es sich bei diesen beiden Standards um weit verbreitete Protokollstandards der Sicherungsschicht in drahtgebundenen beziehungsweise drahtlosen Kommunikationsnetzen handelt.

Zusätzlich erfolgt die Lösung der Aufgabe auch durch eine Vorrichtung bzw. Knoten zum dynamischen Aufbau und zur Steuerung von kurzzeitigen und gesicherten Kommunikationsgruppen, wobei bei diesem Knoten zumindest folgende logische Komponenten vorgesehen sind:
- eine zentrale Verwaltungseinrichtung zur Interaktion mit Applikationen, Komponenten oder Benutzern des Knotens und zum Kontrollieren und Bearbeiten von Nachrichten, welche zwischen den an einer Kommunikationsgruppe teilnehmenden Knoten ausgetauscht werden,
- eine Einrichtung zum Managen und zum Speichern verschiedener Vorgehensweisen in Bezug aus Einrichten und Steuern von Kommunikationsgruppen vorgesehen ist,
- eine Gruppen-Informationsmanagement-Einrichtung zum Verwalten und Speichern aller Informationen über jene Kommunikationsgruppen, an welchen vom Knoten teilgenommen wird,
- eine Einrichtung zum Generieren der Sicherheitsschlüssel für eine gesicherte Übertragung von Nachrichten innerhalb der Kommunikationsgruppe,
- eine Nachrichtenerzeugungseinrichtung zum Erzeugen von Broadcast-, Multicast- und Unicast-Nachrichten, wobei
- die Verwaltungseinrichtung (CPC) ausgebildet ist zur Triggerung einer Broadcast-Nachricht (BC) für die Nachrichtenerzeugungseinrichtung (MB), welche zumindest eine Gruppenkennung (Group-ID), eine Kennung (ID1) des Initiator-Knotens (IKN), Information (Group-Info) über die Kommunikationsgruppe und eine Adresse (ADR1) des Initiator-Knotens (IKN) enthält,
- eine Nachrichtenübertragungseinrichtung zum Übertragen von Broadcast-, Multicast- und Unicast-Nachrichten,
- eine Nachrichtenempfangseinrichtung zum Empfangen von Broadcast-, Multicast- und Unicast-Nachrichten vom Übertragungsmedium,
- und eine Verarbeitungseinrichtung zum Analysieren der ankommenden Broadcast-, Multicast- und Unicast-Nachrichten und der von diesen beinhalteten Informationen.

Diese Vorrichtung umfasst zumindest jene logischen Komponenten, über welche ein Knoten verfügen muss, damit von ihm auf einfache und effiziente Weise einerseits eine Kommunikationsgruppe automatisch und dynamisch aufgebaut sowie gesteuert werden kann und damit vom diesem Knoten anderseits an einer solchen Kommunikationsgruppe ohne Aufwand einer Registrierung bzw. ohne Voraussetzung von generellen Infrastruktur-Diensten teilgenommen werden kann.

Die Erfindung wird nachfolgend in beispielhafter Weise unter Bezugnahme auf die beigefügten Figuren näher erläutert. Es zeigen:
- Fig. 1: eine schematische Darstellung der logischen Komponenten eines Knotens zur Durchführung des erfindungsgemäßen Verfahrens
- Fig. 2: den schematischen Ablauf des dynamischen Aufbaus einer kurzzeitig gebildeten Kommunikationsgruppe mit gesicherter Übertragung
- Fig. 3: den schematischen Ablauf des Verlassens der kurzzeitig gebildeten Kommunikationsgruppe durch einen teilnehmenden Knoten
- Fig. 4: den schematischen Ablauf des Verlassens der kurzzeitig gebildeten Kommunikationsgruppe durch einen Initiator-Knoten

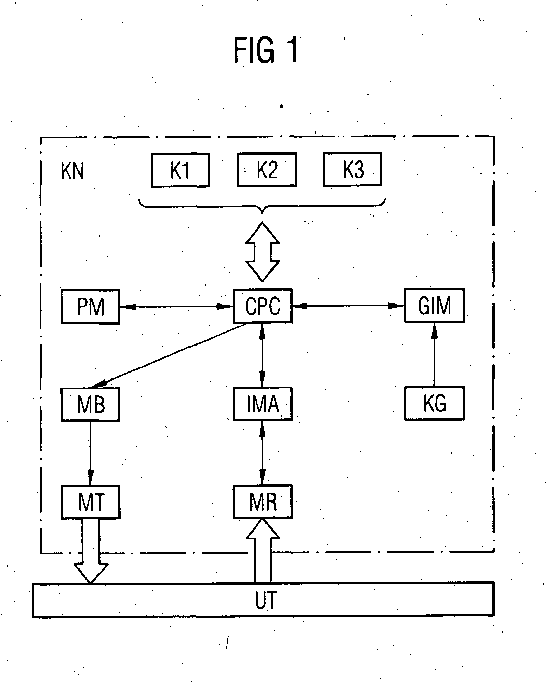

Figur 1 zeigt beispielhaft eine schematische Darstellung eines Knotens KN zur Durchführung des erfindungsgemäßen Verfahrens, wobei sowohl ein Knoten, von dem eine Kommunikationsgruppe gestartet wird, als auch ein an der Kommunikationsgruppe nur teilnehmender Knoten über die beispielhaft dargestellten logischen Basisfunktionen verfügen sollte.

Der Knoten KN umfasst neben anderen Komponenten bzw. Applikationen K1, K2, K3, welche bei einem Ablauf des erfindungsgemäßen Verfahrens nicht benötigt werden, eine zentrale Verwaltungseinrichtung CPC. Von der zentralen Verwaltungseinrichtung CPC werden einerseits Interaktionen mit den anderen Komponenten bzw. Applikationen K1, K2, K3 sowie Benutzern des Knoten KN kontrolliert. Anderseits wird von der zentralen Verwaltungseinrichtung CPC auch die Kontrolle und die Bearbeitung von Nachrichten, welche innerhalb der Kommunikationsgruppe ausgetauscht werden, durchgeführt und mit den für den Aufbau und eine Steuerung einer Kommunikationsgruppe notwendigen, logischen Funktionen des Knotens kommuniziert.

Weiters umfasst der Knoten KN eine Einrichtung zum Verwalten und Speichern von verschiedenen Vorgehensweisen (Modellen) für Aufbau und Verwaltung von kurzzeitigen Kommunikationsgruppen - einen so genannten Policy Manager PM.

Neben dem Policy Manager PM ist auch eine Gruppen-Informationsmanagement-Einrichtung GIM vorgesehen, von welcher spezifischen Informationen - wie beispielsweise Gruppenkennungen, Multicast-Kennungen, Kennungen teilnehmender Knoten, etc. - von verschiedenen Kommunikationsgruppen verwaltet und gespeichert werden. Von einer Einrichtung zum Generieren von Sicherheitsschlüssel - dem so genannten Key Generator KG - werden der Gruppen-Informationsmanagement-Einrichtung GIM gruppenspezifische Sicherheitsschlüssel zur Verfügung gestellt. Diese Sicherheitsschlüssel werden dann z.B. für ein symmetrisches Kryptosystem zur gesicherten Übertragung der Multicast- bzw. Unicast-Nachrichten innerhalb der Kommunikationsgruppe eingesetzt. Im Prinzip kommt der Key Generator KG nur in einem Knoten KN zum Einsatz, von welchem eine Kommunikationsgruppe gestartet und gesteuert wird. Da aber jeder Knoten KN in der Lage sein soll, eine Kommunikationsgruppe zu initiieren bzw. zu managen, kann der Key Generator KG auch bei nur an der Kommunikationsgruppe teilnehmenden Knoten KN vorgesehen sein.

Weiters umfasst der Knoten KN eine Nachrichtenerzeugungseinrichtung oder einen Message Builder MB, welcher von der zentralen Verwaltungseinrichtung gesteuert wird. Mit Hilfe des Message Builders MB werden Broadcast-, Multicast- sowie Unicast-Nachrichten erzeugt. Vom Message Builder MB wird ein Nachrichtenübertragungseinrichtung oder ein Message Transmitter MT angesteuert, von welchem dann die Broadcast-, Multicast- sowie Unicast-Nachrichten an ein Übertragungsmedium UT weitergeleitet werden.

Weiters umfasst der Knoten KN auch eine Nachrichtenempfangseinrichtung oder einen Message Receiver MR, von welcher Broadcast-, Multicast- sowie Unicast-Nachrichten über das Übertragungsmedium UT empfangen werden. Vom Message Receiver MR werden empfangene Nachrichten an eine Verarbeitungseinrichtung zum Analysieren der ankommenden Nachrichten - einem so genannten Incoming Message Analyzer IMA weitergeleitet. Vom Incoming Message Analyzer IMA wird in den ankommenden Nachrichten enthaltene Information (z.B. Gruppenkennungen, Kennungen und Adressen anderer Knoten KN, Profil und/oder Zweck einer Kommunikationsgruppen, etc.) analysiert und an die zentrale Verwaltungseinrichtung CPC weitergeleitet.

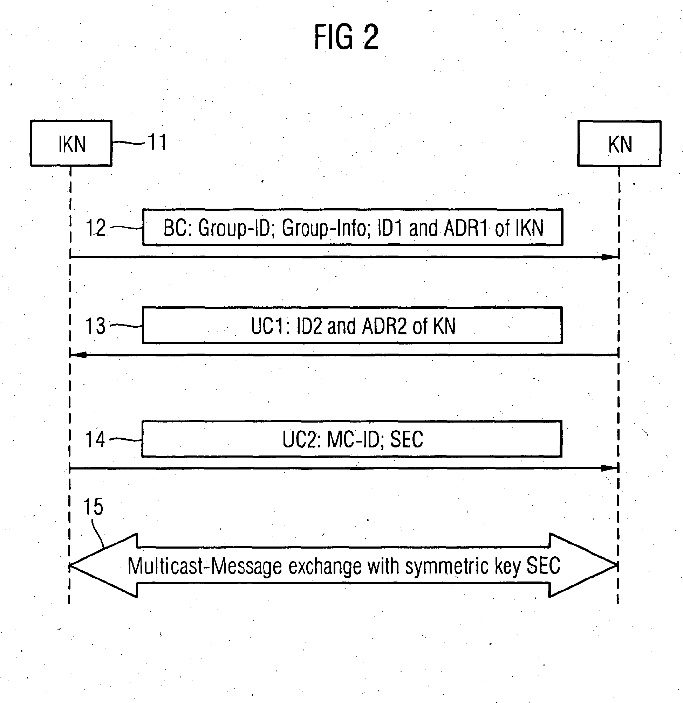

Figur 2 zeigt den schematischen Ablauf eines automatischen und dynamischen Aufbaus einer kurzzeitig gebildeten Kommunikationsgruppe mit gesicherter Übertragung. Dabei wird von einem Knoten - einem so genannten Initiator-Knoten IKN - versucht, eine neue Kommunikationsgruppe für eine bestimmten Zweck - wie z.B. für eine Diskussionsgruppe, für ein elektronisches Spiel mit mehreren Mitspielen, um Videoinformation zur Verfügung zu stellen, etc. aufzubauen. Zu diesem Zweck wird in einem ersten Verfahrenschritt 11 - getriggert durch die zentrale Verwaltungseinrichtung CPC des Initiator-Knotens IKN - von der Gruppen-Informationsmanagement-Einrichtung GIM des Initiator-Knotens IKN Daten für eine neue Kommunikationsgruppe wie z.B. eine Gruppenkennung Group-ID, ein Gruppeprofil, etc., aber auch eine Sicherheitsschüssel SEC, welcher vom Key Generator KG für die neue Kommunikationsgruppe generiert wird, erstellt und an die zentrale Verwaltungseinrichtung CPC des Initiator-Knotens weitergeleitet.

Von der zentralen Verwaltungseinrichtung CPC des Initiator-Knotens IKN werden dann alle notwendigen Informationen wie beispielsweise die Gruppenkennung Group-ID, ein Gruppenprofil, etc. an den Message Builder MB des Initiator-Knotens weitergeleiten, von welchem dann eine Broadcast-Nachricht BC erzeugt wird. Diese Broadcast-Nachricht beinhaltet neben der Gruppenkennung Group-ID und Informationen Group-Info über die Kommunikationsgruppe wie z.B. Gruppenprofile, Zweck, etc. zumindest auch eine Kennung ID1 sowie eine Adresse ADR1 des Initiator-Knotens IKN. Als Adresse ADR1 können beispielsweise IP- oder MAC-Adresse des Initiator-Knotens IKN verwendet werden.

Die Kennung ID1 des Initiator-Knotens kann beispielsweise mit Hilfe eines asymmetrischen Kryptosystems durch Verschlüsselung der Gruppenkennung Group-ID mit einem geheimen Schlüssel des Initiator-Knotens IKN erzeugt werden. Dabei kann z.B. ein bereits vorhandenes Security-Service in einem Kommunikationsnetz bzw. in zusammenarbeitenden Kommunikationsnetzen genutzt werden. Ist z.B. kein Security-Service verfügbar, so muss in der Broadcast-Nachricht BC für eine Authentifizierung des Initiator-Knotens IKN auch ein öffentlicher Schlüssel übertragen werden.

In einem zweiten Verfahrensschritt 12 wird dann die Broadcast-Nachricht BC vom Message Transmitter MT - getriggert durch den Message Builder MB an das Übertragungsmedium UT übertragen, durch welches die Broadcast-Nachricht BC allen über dieses Übertragungsmedium UT erreichbaren Knoten KN zur Verfügung gestellt wird.

Vom Incoming Message Analyzer IAM des in Figur 2 beispielhaft dargestellten Knotens KN, welcher von der zentralen Verwaltungseinrichtung CPC des Knotens KN getriggert worden ist, werden die Inhalte aller ankommenden Nachrichten wie z.B. auch jene der Broadcast-Nachricht BC, analysiert, nachdem sie vom Message Receiver MR empfangen worden sind. Die Informationen der Broadcast-Nachricht BC werden dann im Knoten KN vom Incoming Message Analyzer IAM an die zentrale Verwaltungseinrichtung CPC des Knoten KN weitergeleitet. Dort wird die Authentifizierung des Initiator-Knotens IKN durchgeführt - beispielsweise mit Hilfe eines entsprechenden öffentlichen Schlüssels des Initiator-Knotens IKN, falls ein asymmetrisches Kryptosystem zum Einsatz kommt. Außerdem werden die in der Broadcast-Nachricht BC mitgesendeten Informationen Group-Info über die Kommunikationsgruppe wie z.B. Gruppenprofile, Zweck, etc. analysiert und entschieden, ob vom Knoten KN an der Kommunikationsgruppe teilgenommen wird oder nicht. Dabei kann auch der Nutzer des Knoten KN z.B. durch ein Dialogfenster am Display eines Endgerätes kontaktiert und zur Eingabe eine Entscheidung aufgefordert werden.

Wird vom Knoten nicht an der Kommunikationsgruppe teilgenommen, so wird die Broadcast-Nachricht BC vom Knoten KN einfach verworfen. Wird der Knoten KN allerdings Teilnehmer in der Kommunikationsgruppe, so werden - getriggert durch seine zentrale Verwaltungseinrichtung CPC von seiner Gruppen-Informationsmanagement-Einrichtung GIM die Informationen zur Kommunikationsgruppe wie z.B. die Gruppenkennung Group-ID, das Gruppenprofil, etc. gespeichert und danach sein Message Builder MB aktiviert. Vom Message Builder wird dann eine erste Unicast-Nachricht UC1 an den Initiator-Knoten IKN erstellt, welche zumindest eine Kennung ID2 und eine Adresse ADR2 des Knoten umfassen. Als Adresse ADR2 können beispielsweise IP- oder MAC-Adresse des Knotens IK verwendet werden. Die Kennung ID2 des Knotens KN kann beispielsweise wie beim Initiator-Knoten durch Verschlüsselung der Gruppenkennung Group-ID mit einem privaten Schlüssel des Knoten KN erzeugt werden.

Diese erste Unicast-Nachricht UC1, welche aus Sicherheitsgründen z.B. mit dem öffentlichen Schlüssel des Initiator-Knotens IKN verschlüsselt sein kann, wird dann mittels Message Transmitter MT des Knotens KN und über des Übertragungsmedium UT in einem dritten Verfahrensschritt 13 an den Initiator-Knoten IKN gesendet.

Vom Message Receiver MR des Initiator-Knotens IKN wird die erste Unicast-Nachricht UC1 empfangen, entschlüsselt und an den Incoming Message Analyzer IMA des Initiator-Knotens IKN zur Analyse weitergeleitet. Vom Incoming Message Analyzer IMA des Initiator-Knotens IKN werden dann die Inhalte der ersten Unicast-Nachricht UC1 an die zentrale Verwaltungseinrichtung CPC des Initiator-Knoten IKN übermittelt. Dort wird die Authentifizierung des Knotens KN durchgeführt - beispielsweise mit Hilfe eines entsprechenden öffentlichen Schlüssels des Knotens KN, falls ein asymmetrisches Kryptosystem zum Einsatz kommt. Entsprechend der im Policy Manager hinterlegten Vorgehensweisen für Kommunikationsgruppen wird dann der Knoten KN als neu teilnehmender Knoten in die Kommunikationsgruppe aufgenommen und die von der Gruppen-Informationsmanagement-Einrichtung GIM gespeicherten Informationen zur Kommunikationsgruppe aktualisiert.

Danach wird der Message Builder MB des Initiator-Knotens aktiviert und von diesem eine zweite Unicast-Nachricht UC2 für einen Transport der notwendigen Detailinformationen über die Kommunikationsgruppe erstellt. Diese zweite Unicast-Nachricht UC2 beinhaltet zumindest die Multicast-Kennung MC-ID der Kommunikationsgruppe sowie den bereits vom Key Generator KG erzeugten Sicherheitsschlüssel SEC für eine gesicherte Übertragung von Nachrichten innerhalb der Kommunikationsgruppe.

Diese zweite Unicast-Nachricht UC2, welche aus Sicherheitsgründen z.B. mit dem öffentlichen Schlüssel des Knotens KN verschlüsselt sein kann, wird dann mittels Message Transmitter MT des Initiator-Knotens IKN und über des Übertragungsmedium UT in einem vierten Verfahrensschritt 14 an den Knoten KN übertragen.

Vom Message Receiver MR des Knotens KN wird dann die zweite Unicast-Nachricht UC2 empfangen, entschlüsselt und an den Incoming Message Analyzer IMA des Knotens KN zur Analyse weitergeleitet. Vom Incoming Message Analyzer IMA werden dann die Inhalte der zweiten Unicast-Nachricht UC2 an die zentrale Verwaltungseinrichtung CPC des Knoten KN übermittelt, von welchem dann die Gruppen-Informationsmanagement-Einrichtung GIM des Knotens KN getriggert wird, die gespeicherten Informationen zur Kommunikationsgruppe zu aktualisieren und z.B. die Multicast-Kennung MC-ID und den Sicherheitsschlüssel SEC der Kommunikationsgruppe zu speichern.

In einem fünften Verfahrensschritt 15 können dann vom Knoten KN innerhalb der Kommunikationsgruppe Multicast- und/oder Unicast-Nachrichten mit Hilfe des Sicherheitsschlüssels SEC in gesicherter Form ausgetauscht werden.

Der in Figur 2 dargestellte Knoten KN steht beispielhaft für jeden Knoten eines Kommunikationsnetzes bzw. mehrerer zusammenarbeitender Kommunikationsnetze, welche von der Broadcast-Nachricht BC erreicht werden können. Die Aufnahme von jedem Knoten KN in die Kommunikationsgruppe erfolgt mittels Unicast-Nachrichten UC1 und UC2, welche zwischen Knoten KN und Initiator-Knoten IKN ausgetauscht werden bzw. entsprechend der beiden Verfahrensschritte 13 und 14.

Für eine Synchronisation eines Startzeitpunktes - wie es beispielsweise für die Übertragung von Videoinformationen sinnvoll ist - kann vom Initiator-Knoten IKN eine spezielle, verschlüsselte Multicast-Nachricht an alle an der Kommunikationsgruppe teilnehmenden Knoten KN versendet werden. Für manche Anwendungen, wie beispielsweise Diskussionsforen kann es auch sinnvoll sein, wenn z.B. die Kennungen, die Adressen oder Informationen über alle an der Kommunikationsgruppe teilnehmenden Knoten KN vom Initiator-Knoten IKN mittels Multicast-Nachricht verteilt werden.

Um eine bereits existierende Kommunikationsgruppe laufend zu erweitern, kann beispielsweise in periodischen Abständen vom Initiator-Knoten IKN eine Broadcast-Nachricht BC versendet werden. Das Erstellen bzw. das Versenden dieser Broadcast-Nachricht BC, welche zumindest die Gruppenkennung Group-ID, Informationen Group-Info über die Kommunikationsgruppe wie z.B. Gruppenprofile, Zweck, etc., die Kennung ID1 sowie eine Adresse ADR1 des Initiator-Knotens IKN beinhalten sollte, erfolgt wie in den beiden Verfahrensschritten 11 und 12 beschrieben. Wird dann aufgrund dieser Broadcast-Nachricht BC von einem Knoten KN an der Kommunikationsgruppe teilgenommen, so werden ebenfalls die in Figur 2 beschriebenen Verfahrensschritte 13 und 14 durchlaufen.

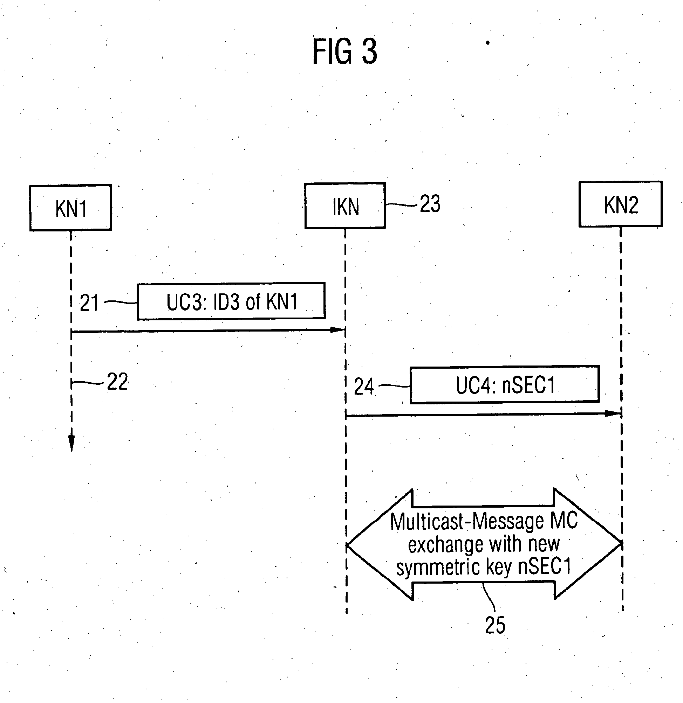

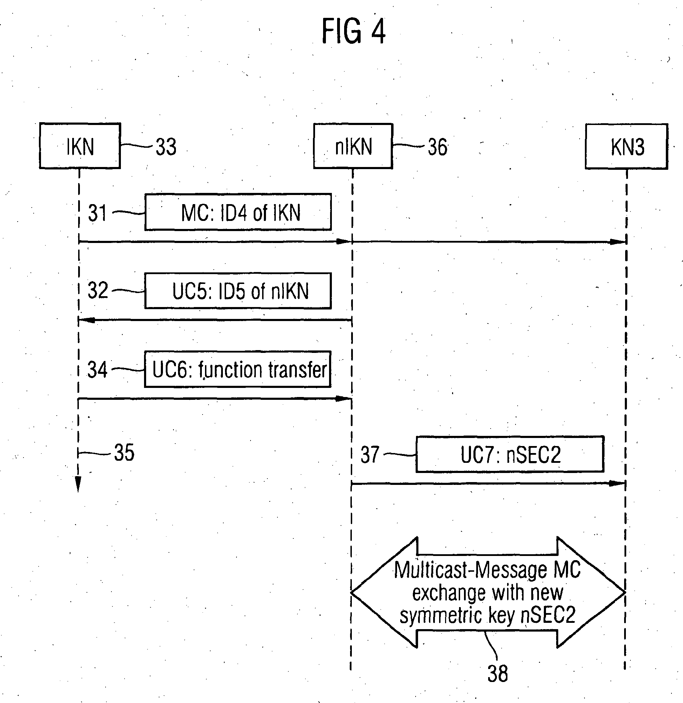

Der Einfachheit halber wird bei den weiteren beispielhaften Ausführungen zu den in Figur 3 bzw. Figur 4 dargestellten Abläufen auf eine detaillierte Darstellung der innerhalb der Knoten IKN, nIKN, KN1 KN2, KN3 ablaufenden Vorgänge - detaillierte Mitwirkung der logischen Komponenten der Knoten IKN, nIKN, KN1 KN2, KN3 - verzichtet, da diese sich kaum von den bereits beschrieben Vorgängen unterscheiden.

Von Figur 3 wird beispielhaft der Ablauf beschrieben, wenn eine existierende Kommunikationsgruppe von einem beispielhaften Knoten KN1 verlassen wird. In einem sechsten Verfahrenschritt 21 wird von einen Knoten KN1, von welchem die Kommunikationsgruppe verlassen wird, eine dritte spezielle Unicast-Nachricht UC3 an den Initiator-Knoten IKN gesendet. Diese dritte Unicast-Nachricht UC3 umfasst dabei zumindest eine Kennung ID3 des Knotens KN1, wobei zur Erzeugung dieser Kennung ID3 z.B. ein geheimer Schlüssel des Knotens KN1 eingesetzt werden kann. In einem siebenten Verfahrensschritt 22 wird dann die Kommunikationsgruppe vom Knoten KN1 verlassen.

Nach dem Empfang der dritten Unicast-Nachricht UC3 durch den Initiator-Knoten IKN, wird in einem achten Verfahrensschritt 23 der Knoten KN1 authentifiziert - beispielsweise mit Hilfe eines entsprechenden öffentlichen Schlüssels - und alle zu diesem Knoten KN1 gehörenden Informationen gelöscht. Dazu wird von der zentralen Verwaltungseinrichtung CPC des Initiator-Knotens IKN die Gruppen-Informationsmanagement-Einrichtung GIM angestoßen, die gespeicherten Informationen zur Kommunikationsgruppe zu aktualisieren, und mit Hilfe des Key Generator KG ein neuer Sicherheitsschlüssel nSEC1 für die Kommunikationsgruppe erstellt.

In einem neunten Verfahrensschritt 24 wird dann vom Initiator-Knoten IKN an jeden noch an der Kommunikationsgruppe teilnehmenden Knoten KN2 eine vierte Unicast-Nachricht UC4 versendet. Diese vierte Unicast-Nachricht UC4 beinhaltet zumindest den neuen Sicherheitsschlüssel nSEC1 der Kommunikationsgruppe. Mit dieser vierten Unicast-Nachricht UC4 können aber auch Informationen (z.B. Kennung ID3, Adresse, etc.) des Knotens KN1 versendet werden, von welchem die Kommunikationsgruppe verlassen worden ist. Zusätzlich ist es auch möglich, dass beispielsweise aus Sicherheitsgründen die Gruppenkennung und/oder die Multicast-Kennung geändert werden und die neuen Kennungen mit der vierten Unicast-Nachricht UC4 den in der Kommunikationsgruppe verbleibenden Knoten KN2 mitgeteilt werden. Aus Sicherheitsgründen wird die jeweilige vierten Unicast-Nachricht UC4 z.B. zusätzlich mit einem öffentlichen Schlüssel des jeweiligen Knoten KN2 verschlüsselt, an welchen diese vierten Unicast-Nachricht UC4 gesendet wird.

In einem zehnten Verfahrensschritt 25 können dann vom den in der Kommunikationsgruppe verbliebenen Knoten KN2 wieder innerhalb der Kommunikationsgruppe Multicast- und/oder Unicast-Nachrichten in gesicherter Form - aber mit dem neuen Sicherheitsschlüssel nSEC1 ausgetauscht werden. Wurden ebenfalls die Gruppenkennung und/oder die Multicast-Kennung der Kommunikationsgruppe geändert, so werden ab nun diese neuen Kennungen für den Austausch von Multicast- und/oder Unicast-Nachrichten verwendet.

Figur 4 beschreibt beispielhaft den Ablauf, wenn die Kommunikationsgruppe vom Initiator-Knoten IKN verlassen wird.

Dabei wird vom Initiator-Knoten IKN in einem elften Verfahrensschritt 31 eine spezielle Multicast-Nachricht MC an alle an der Kommunikationsgruppe teilnehmenden Knoten nIKN, KN3 gesendet, durch welche vom Initiator-Knoten IKN ein Transfer einer Funktion als Initiator-Knoten IKN angefragt wird. Diese Multicast-Nachricht umfasst zumindest eine Kennung ID4 des Initiator-Knotens IKN, wobei zur Erzeugung dieser Kennung ID4 z.B. ein geheimer Schlüssel des Initiator-Knotens IKN verwendet werden kann.

Nach dem Empfang dieser Multicast-Nachricht MC und der Authentifizierung des Initiator-Knotens IKN, kann von einem Knoten nIKN entschieden werden, ob die Funktion als Initiator-Knoten übernommen wird. Dazu wird von diesem Knoten nIKN in einem zwölften Verfahrensschritt 32 eine fünfte spezielle Unicast-Nachricht UC5, welche zumindest eine Kennung ID5 des Knotens nIKN erhält, die z.B. unter Verwendung eines geheimen Schlüssels des Knotens nIKN erzeugt worden ist, an den Initiator-Knoten übertragen. Danach wird von diesem Knoten nIKN auf eine Antwort des Initiator-Knotens IKN gewartet. Wird der Knoten nIKN innerhalb einer vordefinierten Zeitspanne nicht vom Initiator-Knoten IKN kontaktiert, so wird der Vorgang einfach verworfen.

In einem dreizehnten Verfahrensschritt 33 werden vom Initiator-Knoten IKN aller erhaltenen Antworten auf die Multicast-Nachricht MC ausgewertet - d.h. antwortenden Knoten nIKN werden authentifiziert und dann ein neuer Initiator-Knoten ausgewählt, wobei verschiedene Vorgehensweisen, welche z.B. aus dem Policy Manager PM abgefragt werden können, angewendet werden können. Beispielsweise die Funktion des Initiator-Knotens IKN an den Knoten nIKN übertragen werden, von dem als erster eine Antwort erhalten wird. Es kann aber z.B. auch der Nutzer des Initiator-Knotens IKN z.B. durch ein Dialogfenster am Display eines Endgerätes kontaktiert und zur Eingabe eine Entscheidung aufgefordert werden.

Wurde eine Entscheidung über den Transfer der Initiator-Funktion getroffen, so wird in einem vierzehnten Verfahrensschritt 34 mit einer sechsten speziellen Unicast-Nachricht UC6 die für eine Steuerung der Kommunikationsgruppe notwendige Information (z.B. Gruppenkennung, Gruppenprofil, Kennungen der teilnehmenden Knoten, etc.) an den Knoten nIKN, von welchem die Initiator-Funktion übernommen werden soll, übertragen. Diese sechste Unicast-Nachricht UC6 kann bei Bedarf z.B. aus Sicherheitsgründen mit beispielsweise einem öffentlichen Schlüssel des Knoten nIKN verschlüsselt werden.

Vom Initiator-Knoten werden in seiner Gruppen-Informationsmanagement-Einrichtung GIM alle zur abgegebenen Kommunikationsgruppe gehörenden Informationen gelöscht. In einem fünfzehnten Verfahrensschritt 35 wird dann die Kommunikationsgruppe von Initiator-Knoten verlassen.

Durch den Erhalt der sechsten Unicast-Nachricht UC6 wird von Knoten nIKN die Initiator-Funktion übernommen - d.h. von diesem Knoten nIKN wird in einem sechzehnten Verfahrensschritt 36 mit Hilfe seiner Gruppen-Informationsmanagement-Einrichtung GIM die bekommene Information über die Kommunikationsgruppe und die teilnehmenden Knoten KN3 gespeichert und mittels seines Key Generator KG ein neuer Sicherheitsschlüssel nSEC2 für die Kommunikationsgruppe generiert.

In einem siebzehnten Verfahrensschritt 37 wird vom Knoten nIKN als neuer Initiator-Knoten eine siebente Unicast-Nachricht UC7 für jenen in der Kommunikationsgruppe verbliebenen Knoten KN3 erstellt und versendet. Diese siebente Unicast-Nachricht UC7 beinhaltet zumindest den neuen Sicherheitsschlüssel nSEC2 der Kommunikationsgruppe. Mit dieser siebenten Unicast-Nachricht UC7 können aber auch Informationen (z.B. Kennung ID4, Adresse, etc.) des Initiator-Knoten IKN versendet werden, von welchem die Kommunikationsgruppe verlassen worden ist. Aus Sicherheitsgründen kann die jeweilige siebente Unicast-Nachricht UC7 z.B. zusätzlich mit einem öffentlichen Schlüssel des jeweiligen Knoten KN3 verschlüsselt werden.

Zusätzlich ist es auch möglich, dass beispielsweise aus Sicherheitsgründen die Gruppenkennung und/oder die Multicast-Kennung vom Knoten nIKN als neuer Initiator-Knoten geändert werden und die neuen Kennungen mit der siebenten Unicast-Nachricht UC7 den in der Kommunikationsgruppe verbliebenen Knoten KN3 mitgeteilt werden.

Wird eine Kommunikationsgruppe z.B. von allen teilnehmenden Knoten verlassen bzw. verbleibt nur noch ein Knoten bzw. der Initiator-Knoten IKN in der Kommunikationsgruppe, so wird diese Kommunikationsgruppe automatisch aufgelöst. Um die Existenz einer Kommunikationsgruppe mit gesicherter Übertragung sicher zu stellen, kann beispielsweise vom Initiator-Knoten KN periodisch eine spezielle Anfrage (z.B. in Form einer Multicast-Nachricht) an alle teilnehmenden Knoten versendet werden, um diese über die Existenz eines Initiator-Knotens IKN zu informieren. Außerdem kann z.B., um die Existenz der teilnehmenden Knoten sicherzustellen, vom Initiator-Knoten IKN eine Rückmeldung auf diese Anfrage gefordert werden.

Das Versenden der Broadcast-, Multicast- und Unicast-Nachrichten BC, MC, UC kann beispielsweise unter Verwendung von Ethernet- (IEEE802.3) und/oder Wireless LAN (WLAN, IEEE802.11)-Technologie realisiert werden.

Von diesen Technologien (Ethernet, WLAN) wird eine Übertragung dieser Nachrichten auf der so genannten Sicherungsschicht (Data Link Layer), z.B. nach dem OSI (Open System Interconnection)-Modell implementierten Protokollstapeln die Sicherungsschicht (Schicht 2, auch als Data Link Layer oder Link Layer bezeichnet), als gemeinsames Übertragungsmedium UT ermöglicht. Dabei wird z.B. auch ein Transport dieser Nachrichten über verschiedene Netzelemente wie z.B. Repeater oder Bridges auf derselben Schicht 2 bzw. demselben Link Layer vorgenommen.

Insbesondere die Übertragung von der von erfindungsgemäßen Verfahren verwendeten Unicast- UC und Broadcast-Nachrichten BC kann bei diesen Technologien (Ethernet, WLAN) auf einfache und direkte Weise implementiert werden.

Die Übertragung der beim erfindungsgemäßen Verfahren zum Einsatz kommenden Multicast-Nachrichten MC - wie z.B. für die innerhalb der Kommunikationsgruppe stattfindende Kommunikation - kann beim Einsatz von Ethernet- bzw. WLAN-Technologien immer dann auf einfache Weise eingesetzt werden, wenn eine so genannte Multicast-Adresse, welche der bereits angeführten Multicast-Kennung MC-ID entspricht, durch eine z.B. verschlüsselte Unicast-Nachricht an die einzelnen an einer Kommunikationsgruppe teilnehmenden Knoten KN von einem Initiator-Knoten IKN verteilt worden ist.

Die Basisstruktur der Broadcast-, Multicast- und Unicast-Nachrichten BC, MC, UC beim Einsatz von Ethernet- bzw. WLAN-Technologie entspricht im Prinzip dem Aufbau eines Datenpaketes nach Ethernet (IEEE802.3) bzw. WLAN (IEEE802.11).

## Patentansprüche

1. Verfahren zum dynamischen Aufbau und zur Steuerung von kurzzeitig gebildeten Kommunikationsgruppen mit gesicherter Übertragung, wobei potentiell an einer Kommunikationsgruppe teilnehmende Knoten (KN) über ein gemeinsames Übertragungsmedium (UT) verbunden sind, von welchem eine effiziente Übertragung von Broadcast- und/oder Multicast-Nachrichten (BC, MC) zwischen den Knoten (KN) ermöglicht wird, **dadurch gekennzeichnet, dass** der dynamische Aufbau einer Kommunikationsgruppe durch einen Initiator-Knoten (IKN) in folgenden Schritten erfolgt:
- Versenden einer Broadcast-Nachricht (BC), welche zumindest eine Gruppenkennung (Group-ID), eine Kennung (ID1) des Initiator-Knotens (IKN), Information (Group-Info) über die Kommunikationsgruppe und eine Adresse (ADR1) des Initiator-Knotens (IKN) enthält, an alle mit dem Intiator-Knoten (IKN) über das gemeinsame Übertragungsmedium (UT) verbundenen Knoten (KN) (12),
- Analyse der empfangenen Broadcast-Nachricht (BC) durch die über das gemeinsame Übertragungsmedium (UT) erreichbaren Knoten (KN), wobei der Initiator-Knoten (IKN) von diesen authentifiziert wird (12),
- Zurücksenden einer ersten Unicast-Nachricht (UC1) durch an der Kommunikationsgruppe teilnehmende Knoten (KN) an den Initiator-Knoten (IKN), wobei die Unicast-Nachricht (UC1) zumindest eine Kennung (ID2) und eine Adresse (ADR2) des teilnehmenden Knoten (KN) enthält (13),
- Empfang dieser ersten Unicast-Nachrichten (UC1) und Authentifizierung der teilnehmenden Knoten (KN) durch den Initiator-Knoten (IKN) (13),
- Versand einer zweiten Unicast-Nachricht (UC2), welche zumindest eine Multicast-Kennung (MC-ID) sowie einen Sicherheitsschlüssel (SEC) umfasst, an jeden an der Kommunikationsgruppe teilnehmenden Knoten (KN) durch den Initiator-Knoten (IKN) (14).

2. Verfahren nach Anspruch 1, **dadurch gekennzeichnet, dass** für einen synchronisierten Start der Kommunikationsgruppe vom Initiator-Knoten (IKN) eine spezielle, verschlüsselte Multicast-Nachricht (MC) an alle an der Kommunikationsgruppe teilnehmenden Knoten (KN) versendet wird.

3. Verfahren nach Anspruch 1, **dadurch gekennzeichnet, dass** vom Initiator-Knoten (IKN) die Kennungen aller an der Kommunikationsgruppe teilnehmenden Knoten (KN) an alle an der Kommunikationsgruppe teilnehmenden Knoten (KN) versendet werden.

4. Verfahren nach Anspruch 1, **dadurch gekennzeichnet,**
- **dass** für eine laufende Erweiterung einer bestehenden Kommunikationsgruppe vom Initiator-Knoten (IKN) in periodischen Abständen eine Broadcast-Nachricht (BC), welche zumindest eine Gruppenkennung (Group-ID), eine Kennung (ID1) des Initiator-Knotens (IKN), Information (Group-Info) über die Kommunikationsgruppe und eine Adresse (ADR1) des Initiator-Knotens (IKN) enthält, über das gemeinsame Übertragungsmedium (UT) versandt wird,
- **dass** von Knoten (KN), um der bestehenden Kommunikationsgruppe beizutreten, eine erste Unicast-Nachricht (UC1), welche zumindest eine Kennung (ID2) und eine Adresse (ADR2) des teilnehmenden Knoten (KN) enthält, an den Initiator-Knoten (IKN) gesendet wird
- und **dass** dann diese Knoten (KN) vom Initiator-Knoten (IKN) authentifiziert werden und eine zweite Unicast-Nachricht (UC2), welche zumindest die Multicast-Kennung (MC-ID) sowie den Sicherheitsschlüssel (SEC) der Kommunikationsgruppe umfasst, an diese Knoten (KN) gesendet wird.

5. Verfahren nach einem der Ansprüche 1 bis 3, **dadurch gekennzeichnet, dass**
- von einem Knoten (KN1), von welchem die Kommunikationsgruppe verlassen wird, eine dritte spezielle Unicast-Nachricht (UC3), welche zumindest seine Kennung (ID3) umfasst, an den Initiator-Knoten (IKN) gesendet wird (21, 22),
- dass dann vom Initiator-Knoten (IKN) nach Empfang dieser dritte Unicast-Nachricht (UC3) der entsprechende Knoten (KN1) authentifiziert und die zu diesem Knoten (KN1) gehörenden Informationen gelöscht werden (23),
- dass dann vom Initiator-Knoten (IKN) ein neuer Sicherheitsschlüssel (nSEC1) generiert und dieser verschlüsselt mittels einer vierten Unicast-Nachricht (UC4) an jeden in der Kommunikationsgruppe verbleibenden Knoten (KN2) gesendet wird (24).

6. Verfahren nach Anspruch 5, **dadurch gekennzeichnet, dass** in der vierten Unicast-Nachricht (UC4) gemeinsam mit dem neuen Sicherheitsschlüssel (nSEC1) Informationen über den Knoten (KN1), von welchem die Kommunikationsgruppe verlassen worden ist, versendet werden (24).

7. Verfahren nach Anspruch 5, **dadurch gekennzeichnet, dass** beim Verlassen der Kommunikationsgruppe durch einen Knoten (KN1) neben dem Sicherheitsschlüssel (nSEC1) auch die Multicast-Kennung (MC-ID) und/oder die Gruppenkennung geändert werden.

8. Verfahren nach einem der Ansprüche 1 bis 6, **dadurch gekennzeichnet, dass**
- vom Initiator-Knoten(IKN), von welchem die Kommunikationsgruppe verlassen wird, eine spezielle Multicast-Nachricht (MC), welche zumindest seine Kennung (ID4) und eine Anfrage nach Funktionstransfer umfasst, an alle an der Kommunikationsgruppe teilnehmenden Knoten (nIKN, KN3) versendet wird (31),
- dass von allen jenen Knoten (nIKN), von welchen eine Initiator-Funktion übernommen wird, eine fünfte spezielle Unicast-Nachricht (UC5), welche zumindest ihre Kennung (ID5) enthält, an den Initiator-Knoten (IKN) gesendet wird (32),
- dass nach dem Empfang dieser fünften Unicast-Nachricht (UC5) und der Authentifizierung der antwortenden Knoten (nIKN) vom Initiator-Knoten (IKN) nach einer vorgegebenen Verfahrensweise aus diesen antwortenden Knoten (nIKN) ein neuer Initiator-Knoten gewählt wird (33),
- dass dann mittels einer sechsten Unicast-Nachricht (UC6) Informationen über die Kommunikationsgruppe und über die teilnehmenden Knoten (KN3) vom Initiator-Knoten (IKN) an den neuen Initiator-Knoten (nIKN) übertragen werden (34),
- dass dann vom neuen Initiator-Knoten (nIKN) die Initiator-Funktion übernommen und ein neuer Sicherheitsschlüssel (nSEC2) generiert wird (36), welcher mittels einer siebenten Unicast-Nachricht (UC7) verschlüsselt und gemeinsam mit Informationen über den neuen Initiator-Knoten (nIKN) an jeden in der Kommunikationsgruppe vorhandenen Knoten (KN3) gesendet wird (37).

9. Verfahren nach einem der Ansprüche 1 bis 7, **dadurch gekennzeichnet, dass** während des Aufbaus und/oder beim Verlassen der Kommunikationsgruppe ein asymmetrisches Kryptosystem verwendet wird.

10. Verfahren nach einem der Ansprüche 1 bis 7, **dadurch gekennzeichnet, dass** innerhalb der Kommunikationsgruppe ein symmetrisches Kryptosystem verwendet wird.

11. Verfahren nach einem der Ansprüche 1 bis 9, **dadurch gekennzeichnet, dass** als gemeinsames Übertragung-medium (UT) ein Medium der Sicherungsschicht (Data Link Layer) verwendet wird.

12. Verfahren nach einem der Ansprüche 1 bis 10, **dadurch gekennzeichnet, dass** als gemeinsames Übertragungs-medium (UT) ein Funkübertragungskanal verwendet wird.

13. Verfahren nach einem der Ansprüche 1 bis 11, **dadurch gekennzeichnet, dass** als gemeinsames Übertragungsmedium (UT) ein Datenbus verwendet wird.

14. Verfahren nach einem der Ansprüche 1 bis 12, **dadurch gekennzeichnet, dass** die Broadcast-, Multicast- und die Unicast-Nachricht unter Verwendung des Ethernet (IEEE802.3)-Standards oder des Wireless Local Area Network (WLAN, IEEE802.11)-Standards gesendet werden.

15. Initiator-Knoten (IKN) zum dynamischen Aufbau und zur Steuerung von kurzzeitig gebildeten Kommunikationsgruppen mit gesicherter Übertragung, **dadurch gekennzeichnet, dass** zumindest folgende logische Komponenten vorgesehen sind:
- eine zentrale Verwaltungseinrichtung (CPC) zur Interaktion mit Applikationen, Komponenten oder Benutzern des Knotens (KN) und zum Kontrollieren und Bearbeiten von Nachrichten, welche zwischen den an einer Kommunikationsgruppe teilnehmenden, über ein gemeinsames Übertragungsmedium (UT) verbundenen, Knoten (KN) ausgetauscht werden,
- eine Einrichtung (PM) zum Managen und zum Speichern verschiedener Vorgehensweisen in Bezug auf Einrichten und Steuern von Kommunikationsgruppen,
- eine Gruppen-Informationsmanagement-Einrichtung (GIM) zum Verwalten und Speichern aller Informationen über jene Kommunikationsgruppen, an welchen vom Initiator-Knoten (IKN) teilgenommen wird,
- eine Einrichtung (KG) zum Generieren der Sicherheitsschlüssel (SEC, nSEC1, nSEC2) für eine gesicherte Übertragung von Nachrichten innerhalb der Kommunikationsgruppe,
- eine Nachrichtenerzeugungseinrichtung (MB) zum Erzeugen von Broadcast-, Multicast- und Unicast-Nachrichten,
- eine Nachrichtenübertragungseinrichtung (MT) zum Übertragen von Broadcast-, Multicast- und Unicast-Nachrichten, wobei
- die zentrale Verwaltungseinrichtung (CPC) ausgebildet ist zur Triggerung einer Broadcast-Nachricht (BC) für die Nachrichtenerzeugungseinrichtung (MB), welche zumindest eine Gruppenkennung (Group-ID), eine Kennung (ID1) des Initiator-Knotens (IKN), Information (Group-Info) über die Kommunikationsgruppe und eine Adresse (ADR1) des Initiator-Knotens (IKN) enthält,
- wobei die Nachrichtenübertragungseinrichtung (MT) die Broadcast-Nachricht (BC) an alle mit dem Initiator-Knoten (IKN) über das gemeinsame Übertragungsmedium (UT) verbundenen Knoten (KN) übertragt,
- eine Nachrichtenempfangseinrichtung (MR) zum Empfangen von Broadcast-, Multicast- und Unicast-Nachrichten vom Übertragungsmedium (UT),
- und eine Verarbeitungseinrichtung (IMA) zum Analysieren der ankommenden Broadcast-, Multicast- und Unicast-Nachrichten und der von diesen beinhalteten Informationen.

## Claims

1. Method for the dynamic setting up and control of temporarily formed communications groups with secure transmission, wherein nodes (KN) potentially participating in a communications group are connected via a common transmission medium (UT) which provides for efficient transmission of broadcast and/or multicast messages (BC, MC) between the nodes (KN), **characterized in that** the dynamic setting up of a communications group is carried out by an initiator node (IKN) in the following steps:
- sending of a broadcast message (BC) which contains at least one group identifier (Group-ID), an identifier (ID1) of the initiator node (IKN), information (Group-Info) about the communications group and an address (ADR1) of the initiator node (IKN) to all nodes (KN) connected to the initiator node (IKN) via the common transmission medium (UT) (12),
- analyzing of the received broadcast message (BC) by the nodes (KN) accessible via the common transmission medium (UT), wherein the initiator node (IKN) is authenticated by said nodes (12),
- sending back a first unicast message (UC1) by nodes (KN) participating in the communications group to the initiator node (IKN), wherein the unicast message (UC1) contains at least one identifier (ID2) and an address (ADR2) of the participating node (KN) (13),
- receiving these first unicast messages (UC1) and authentication of the participating nodes (KN) by the initiator node (IKN) (13),
- sending of a second unicast message (UC2) which comprises at least one multicast identifier (MC-ID) and a security key (SEC), to each node (KN) participating in the communications group by the initiator node (IKN) (14).

2. Method according to Claim 1, **characterized in that** for a synchronized start of the communications group, the initiator node (IKN) sends a special encrypted multicast message (MC) to all nodes (KN) participating in the communications group.

3. Method according to Claim 1, **characterized in that** the initiator node (IKN) sends the identifiers of all nodes (KN) participating in the communications group to all nodes (KN) participating in the communications group.

4. Method according to Claim 1, **characterized in that**
- for a continuous expansion of an existing communications group, the initiator node (IKN) sends at periodic intervals a broadcast message (BC) which contains at least one group identifier (Group-ID), an identifier (ID1) of the initiator node (IKN), information (Group-Info) about the communications group and an address (ADR1) of the initiator node (IKN), via the common transmission medium (UT),
- in order to join the existing communications group, nodes (KN) send a first unicast message (UC1) which contains at least one identifier (ID2) and an address (ADR2) of the participating node (KN) to the initiator node (IKN)
- and these nodes (KN) are then authenticated by the initiator node (IKN) and a second unicast message (UC2) which comprises at least the multicast identifier (MC-ID) and the security key (SEC) of the communications group is sent to these nodes (KN).

5. Method according to one of Claims 1 to 3, **characterized in that**
- a node (KN1) which is leaving the communications group sends a third special unicast message (UC3), which comprises at least its identifier (ID3), to the initiator node (IKN) (21, 22),
- the initiator node (IKN), after receiving this third unicast message (UC3), authenticates the corresponding node (KN1) and deletes the information belonging to this node (KN1) (23),
- the initiator node (IKN) then generates a new security key (nSEC1) and sends it encrypted to each node (KN2) remaining in the communications group by means of a fourth unicast message (UC4) (24).

6. Method according to Claim 5, **characterized in that** in the fourth unicast message (UC4), information about the node (KN1) which has left the communications group is sent together with the new security key (nSEC1) (24).

7. Method according to Claim 5, **characterized in that**, when a node (KN1) leaves the communications group, the multicast identifier (MC-ID) and/or the group identifier are also changed in addition to the security key (nSEC1).

8. Method according to one of Claims 1 to 6, **characterized in that**
- the initiator node (IKN) which is leaving the communications group sends a special multicast message (MC) which comprises at least its identifier (ID4) and a request for function transfer to all nodes (nIKN, KN3) participating in the communications group (31),
- all nodes (nIKN) which take over an initiator function send a fifth special unicast message (UC5) which contains at least their identifier (ID5) to the initiator node (IKN) (32),
- after receiving this fifth unicast message (UC5) and authenticating the responding nodes (nIKN), the initiator node (IKN) selects from these responding nodes (nIKN) a new initiator node in accordance with a predetermined procedure (33),
- and then information about the communications group and about the participating nodes (KN3) is transmitted by the initiator node (IKN) to the new initiator node (nIKN) by means of a sixth unicast message (UC6) (34),
- the new initiator node (nIKN) then takes over the initiator function and generates a new security key (nSEC2) (36), which is sent encrypted and together with information about the new initiator node (nIKN) to each node (KN3) present in the communications group by means of a seventh unicast message (UC7) (37).

9. Method according to one of Claims 1 to 7, **characterized in that** an asymmetric encryption system is used during the setting up of and/or when leaving the communications group.

10. Method according to one of Claims 1 to 7, **characterized in that** a symmetric encryption system is used within the communications group.

11. Method according to one of Claims 1 to 9, **characterized in that** a medium of the data link layer is used as the common transmission medium (UT).

12. Method according to one of Claims 1 to 10, **characterized in that** a radio transmission channel is used as the common transmission medium (UT).

13. Method according to one of Claims 1 to 11, **characterized in that** a data bus is used as the common transmission medium (UT).

14. Method according to one of Claims 1 to 12, **characterized in that** the broadcast, multicast and unicast messages are sent by using the Ethernet (IEEE802.3) standard or the Wireless Local Area Network (WLAN, IEEE802.11) standard.

15. Initiator node (IKN) for the dynamic setting up and control of temporarily formed communications groups with secure transmission, **characterized in that** at least the following logic components are provided:
- a central management device (CPC) for interaction with applications, components or users of the node (KN) and for controlling and processing messages which are exchanged between the nodes (KN), connected via a common transmission medium (UT), participating in a communications group,
- a device (PM) for managing and for storing various procedures with respect to setting up and controlling communications groups,
- a group information management device (GIM) for managing and storing all information about the communications groups in which the initiator node (IKN) is participating,
- a device (KG) for generating the security keys (SEC, nSEC1, nSEC2) for secure transmission of messages within the communications group,
- a message builder (MB) for generating broadcast, multicast and unicast messages,
- a message transmitter (MT) for transmitting broadcast, multicast and unicast messages, wherein
- the central management device (CPC) is designed to trigger a broadcast message (BC) for the message builder (MB), which message contains at least one group identivier (Group-ID), an identifier (ID1) of the initiator node (IKN), information (Group-Info) about the communications group and an address (ADR1) of the initiator node (IKN),
- wherein the message transmitter (MT) transmits the broadcast message (BC) to all nodes (KN) connected to the initiator node (IKN) via the common transmission medium (UT),
- a message receiver (MR) for receiving broadcast, multicast and unicast messages from the transmission medium (UT),
- and a processing device (IMA) for analyzing the incoming broadcast, multicast and unicast messages and the information contained therein.

## Revendications

1. Procédé d'établissement dynamique et de commande de groupes de communication avec transmission sécurisée formés pour une courte durée, des noeuds (KN) qui participent potentiellement à un groupe de communication étant reliés par l'intermédiaire d'un média de transmission commun (UT) qui permet une transmission efficace de messages de diffusion et/ou de multidiffusion (BC, MC) entre les noeuds (KN), **caractérisé en ce que** l'établissement dynamique d'un groupe de communication est effectué par un noeud initiateur (IKN) selon les étapes suivantes :
- envoi, à tous les noeuds (KN) reliés au noeud initiateur (IKN) par l'intermédiaire du média de transmission commun (UT), d'un message de diffusion (BC) qui contient au moins un identifiant de groupe (Group-ID), un identifiant (ID1) du noeud initiateur (IKN), une information (Group-Info) sur le groupe de communication et une adresse (ADR1) du noeud initiateur (IKN) (12) ;
- analyse du message de diffusion reçu (BC) par les noeuds (KN) joignables via le média de transmission commun (UT), le noeud initiateur (IKN) étant authentifié par ceux-ci (12) ;
- envoi en retour, au noeud initiateur (IKN), d'un premier message de monodiffusion (UC1) par des noeuds (KN) qui participent au groupe de communication, le message de monodiffusion (UC1) contenant au moins un identifiant (ID2) et une adresse (ADR2) du noeud participant (KN) (13) ;
- réception de ces premiers messages de monodiffusion (UC1) et authentification des noeuds participants (KN) par le noeud initiateur (IKN) (13) ;
- envoi, par le noeud initiateur (IKN), à chaque noeud (KN) qui participe au groupe de communication, d'un deuxième message de monodiffusion (UC2) qui comprend au moins un identifiant de multidiffusion (MC-ID) ainsi qu'une clé de sécurité (SEC) (14).

2. Procédé selon la revendication 1, **caractérisé en ce que**, pour un démarrage synchronisé du groupe de communication, un message de multidiffusion (MC) spécial crypté est envoyé par le noeud initiateur (IKN) à tous les noeuds (KN) qui participent au groupe de communication.

3. Procédé selon la revendication 1, **caractérisé en ce que** les identifiants de tous les noeuds (KN) qui participent au groupe de communication sont envoyés par le noeud initiateur (IKN) à tous les noeuds (KN) qui participent au groupe de communication.

4. Procédé selon la revendication 1, **caractérisé en ce que** :
- un message de diffusion (BC), qui contient au moins un identifiant de groupe (Group-ID), un identifiant (ID1) du noeud initiateur (IKN), une information (Group-Info) sur le groupe de communication et une adresse (ADR1) du noeud initiateur (IKN), est, pour un élargissement continu d'un groupe de communication existant, émis à intervalles périodiques par le noeud initiateur (IKN) via le média de transmission commun (UT) ;
- un premier message de monodiffusion (UC1), qui contient au moins un identifiant (ID2) et une adresse (ADR2) du noeud participant (KN), est envoyé par des noeuds (KN) au noeud initiateur (IKN) en vue de l'adhésion au groupe de communication existant ;
- ces noeuds (KN) sont authentifiés par le noeud initiateur (IKN), et un deuxième message de monodiffusion (UC2), qui comprend au moins l'identifiant de multidiffusion (MC-ID) et la clé de sécurité (SEC) du groupe de communication, est envoyé à ces noeuds (KN).

5. Procédé selon l'une des revendications 1 à 3, **caractérisé en ce que** :
- un troisième message de monodiffusion spécial (UC3), qui comprend au moins son identifiant (ID3), est envoyé au noeud initiateur (IKN) par un noeud (KN1) qui quitte le groupe de communication (21, 22) ;
- après réception de ce troisième message de monodiffusion (UC3), le noeud en question (KN1) est authentifié par le noeud initiateur (IKN) et les informations appartenant à ce noeud (KN1) sont effacées (23) ;
- une nouvelle clé de sécurité (nSEC1) est alors générée par le noeud initiateur (IKN) et cette clé est envoyée sous forme cryptée, au moyen d'un quatrième message de monodiffusion (UC4), à chaque noeud (KN2) restant dans le groupe de communication (24).

6. Procédé selon la revendication 5, **caractérisé en ce que** sont envoyées avec la nouvelle clé de sécurité (nSEC1), dans le quatrième message de monodiffusion (UC4), des informations sur le noeud (KN1) qui a quitté le groupe de communication (24).

7. Procédé selon la revendication 5, **caractérisé en ce que**, outre la clé de sécurité (nSEC1), l'identifiant de multidiffusion (MC-ID) et/ou l'identifiant de groupe sont également modifiés lorsqu'un noeud (KN1) quitte le groupe de communication.

8. Procédé selon l'une des revendications 1 à 6, **caractérisé en ce que** :
- un message de multidiffusion spécial (MC), qui comprend au moins son identifiant (ID4) et une requête de transfert de fonction, est envoyé, par le noeud initiateur (IKN) qui quitte le groupe de communication, à tous les noeuds (nIKN, KN3) qui participent au groupe de communication (31) ;
- un cinquième message de monodiffusion spécial (UC5), qui contient au moins son identifiant (ID5), est envoyé au noeud initiateur (IKN) par tous les noeuds (nIKN) qui prennent en charge une fonction d'initiateur (32) ;
- après la réception de ce cinquième message de monodiffusion (UC5) et l'authentification des noeuds qui répondent (nIKN), un nouveau noeud initiateur est choisi par le noeud initiateur (IKN), selon un procédé prédéfini, parmi ces noeuds qui répondent (nIKN) (33) ;
- des informations sur le groupe de communication et sur les noeuds (KN3) qui participent sont alors transmises par le noeud initiateur (IKN), au moyen d'un sixième message de monodiffusion (UC6), au nouveau noeud initiateur (nIKN) (34) ;
- la fonction d'initiateur est alors prise en charge par le nouveau noeud initiateur (nIKN), et une nouvelle clé de sécurité (nSEC2) est générée (36), laquelle est cryptée au moyen d'un septième message de monodiffusion (UC7) et envoyée avec des informations sur le nouveau noeud initiateur (nIKN) à chaque noeud (KN3) présent dans le groupe de communication (37).

9. Procédé selon l'une des revendications 1 à 7, **caractérisé en ce qu'**un cyptosystème asymétrique est utilisé pendant l'établissement et/ou lors de l'abandon du groupe de communication.

10. Procédé selon l'une des revendications 1 à 7, **caractérisé en ce qu'**un cryptosystème symétrique est utilisé au sein du groupe de communication.

11. Procédé selon l'une des revendications 1 à 9, **caractérisé en ce qu'**un média de la couche de sécurisation (Data Link Layer) est utilisé en tant que média de transmission commun (UT).

12. Procédé selon l'une des revendications 1 à 10, **caractérisé en ce qu'**un canal de transmission radio est utilisé en tant que média de transmission commun (UT).

13. Procédé selon l'une des revendications 1 à 11, **caractérisé en ce qu'**un bus de données est utilisé en tant que média de transmission commun (UT).

14. Procédé selon l'une des revendications 1 à 12, **caractérisé en ce que** les messages de diffusion, de multidiffusion et de monodiffusion sont émis en utilisant la norme Ethernet (IEEE802.3) ou la norme Wireless Local Area Network (WLAN, IEEE802.11).

15. Noeud initiateur (IKN) pour d'établissement dynamique et la commande de groupes de communication avec transmission sécurisée formés pour une courte durée, **caractérisé en ce que** sont prévus au moins les composants logiques suivants :
- un dispositif de gestion central (CPC) pour interagir avec des applications, des composants ou des utilisateurs du noeud (KN) et pour contrôler et traiter des messages qui sont échangés entre les noeuds (KN) qui participent à un groupe de communication et sont reliés par l'intermédiaire d'un média de transmission commun (UT),
- un dispositif (PM) pour gérer et sauvegarder différentes approches relatives à la mise en place et à la commande de groupes de communication ;
- un dispositif de gestion d'informations de groupe (GIM) pour gérer et sauvegarder toutes les informations sur les groupes de communication auxquels le noeud initiateur (IKN) participe ;
- un dispositif (KG) pour générer les clés de sécurité (SEC, nSEC1, nSEC2) pour une transmission sécurisée de messages au sein du groupe de communication ;
- un dispositif de génération de messages (MB) pour générer des messages de diffusion, de multidiffusion et de monodiffusion ;
- un dispositif de transmission de messages (MT) pour transmettre des messages de diffusion, de multidiffusion et de monodiffusion ;
- le dispositif de gestion central (CPC) étant réalisé pour déclencher un message de diffusion (BC) pour le dispositif de génération de messages (MB), qui contient au moins à un identifiant de groupe (Group-ID), un identifiant (ID1) du noeud initiateur (IKN), une information (Group-Info) sur le groupe de communication et une adresse (ADR1) du noeud initiateur (IKN) ;
- le dispositif de transmission de messages (MT) transmettant le message de diffusion (BC) à tous les noeuds (KN) reliés au noeud initiateur (IKN) par l'intermédiaire du média de transmission commun (UT) ;
- un dispositif de réception de messages (MR) pour recevoir des messages de diffusion, de multidiffusion et de monodiffusion du média de transmission (UT) ; et
- un dispositif de traitement (IMA) pour analyser les messages de diffusion, de multidiffusion et de monodiffusion entrants et les informations qu'ils contiennent.
